(19) Europäisches Patentamt
European Patent Office
Office européen des brevets

(11) **EP 1 901 561 A1**

(12) **EUROPEAN PATENT APPLICATION**

(43) Date of publication:
**19.03.2008 Bulletin 2008/12**

(51) Int Cl.:
*H04N 7/26* (2006.01)    *G06K 9/00* (2006.01)

(21) Application number: **06120577.9**

(22) Date of filing: **13.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Pixartis SA**
**1005 Lausanne (CH)**

(72) Inventors:
• **Frossard, Pascal**
**1635 La Tour-de-Trême (CH)**

• **Vandergheynst, Pierre**
**1009 Pully (CH)**
• **Jost, Philippe**
**1800 Vevey (CH)**

(74) Representative: **Ganguillet, Cyril et al**
**ABREMA**
**Agence Brevets & Marques**
**Ganguillet & Humphrey**
**Avenue du Théâtre 16**
**Case postale 5027**
**1002 Lausanne (CH)**

(54) **System for very low rate face image compression**

(57)    In this system for very low rate face image compression, the compression is obtained by decomposition of a digital face image over a redundant library of functions. The image is converted into a series of geometric function indexes, along with their respective coefficient tuples which may be used to reconstruct the compressed face image for display. The system includes a face model encoder (10), a matching pursuit encoder (13) fed with residual face image signals (14) delivered from a first output of said face model encoder (10) and giving MP-parameter signals (15) to a first input of a bit-stream generator (16) which delivers the desired bit-stream (17). The face model encoder (10) has a second output giving model parameter signals (18) to a second input of said bit-stream generator (16).

FIG. 1

**Description**

The invention relates to a system for very low rate face image compression and authentication.

Background of the Invention

Field of the Invention

The invention relates generally to digital signal representation, and more particularly to an apparatus and method to compress a digital image signal for improved source quality versus decoding complexity for a given compression bit rate. More particularly, the invention is applied in the context of very low bit rate compression of face image, with simultaneous authentication of people from the compressed bit stream. It can be used in ID systems, access control applications, or digital rights management.

Description of the Background Art

Guaranteeing the identity of trusted end-users accessing a secured service or verifying the identity of individuals gaining access to restricted areas such as airports, stadiums, concert halls or other public places, has become a major concern of a society where mobility is a way of life.

There is also a global trend among developed countries aiming at building a common electronic identity. Such an e-passport could be used as an enhanced identification device at a country's various entry points, but could also give citizens extended facilities to access electronic services: voting system, citizen information but also e-commerce services or credit card facilities among many others.

The conveying media supporting the application has to satisfy several constraints. Among them it should not impair the security of the system and should thus efficiently resist forgery. In order to be efficiently used for e-commerce applications, it should be a widespread support and should be easily integrated into different supports (ID card or passport) and resist various manipulations by human operators. The strongest candidates are smartcards that are nowadays used for many digital applications and could easily be integrated into regular passports. Finally Radio Frequency (RF) tags could also lead to pertinent solutions due to their ability of enabling passive inspection and authentication systems.

All these media share a common property: a low memory footprint (usually much less than 32kb) that dramatically constraints the associated authentication technology. Such a compression rate for passport ID pictures cannot be reached by usual techniques such as JPEG, JPEG2000 with acceptable quality. The system described below proposes to use a matching pursuit algorithm [1] to represent the digital face image in a series of its most meaningful geometric components, chosen from a redundant library of functions. It allows to reach very high compression ratio, with acceptable quality. Simultaneously, the list of geometric components can be directly used for authentication operations, with low rate queries to distant libraries of IDs.

The art in Matching Pursuit (MP) coding is limited. Besides Mallat's paper published in 1993 [1], Neff and Zakhor proposed in 1997 to rely on a 2-D matching pursuit coder to compress the residual prediction error resulting from motion prediction. The basis functions have been limited to Gabor functions, and they have not been optimized to code face images.

Matching Pursuit (MP) is an adaptive algorithm that iteratively decomposes a function $f \in L^2(\mathfrak{R})$ (e.g., image) over a possibly redundant dictionary of functions called *atoms.* Let $D = \{g_\gamma\}_{\gamma \in \Gamma}$ be such a dictionary with $\|g_\gamma\| = 1$. $f$ is first decomposed into:

$$f = \left\langle g_{\gamma 0} \mid f \right\rangle g_{\gamma 0} + Rf,$$

where $\langle g_{\gamma 0}|f \rangle g_{\gamma 0}$ represents the projection of $f$ onto $g_{\gamma 0}$ and $Rf$ is the residual component. Since all elements in $D$ have a unit norm, $g_{\gamma 0}$ is orthogonal to $Rf$, and this leads to:

$$\left\| f \right\|^2 = \left| \left\langle g_{\gamma 0} \mid f \right\rangle \right|^2 + \left\| Rf \right\|^2.$$

In order to minimize $\|Rf\|$ and thus optimize compression, one must choose $g_{\gamma 0}$ such that the projection coefficient $|\langle g_{\gamma 0}| \, f\rangle|$ is maximal. The pursuit is carried further by applying the same strategy to the residual component. After $N$ iterations, one has the following decomposition for $f$:

$$f = \sum_{n=0}^{N-1} \langle g_{\gamma n} \mid R^n f \rangle g_{\gamma n} + R^N f,$$

with, $R^0 f = f$. Similarly, the energy $\|f\|^2$ is decomposed into:

$$\|f\|^2 = \sum_{n=0}^{N-1} \left| \langle g_{\gamma n} \mid R^n f \rangle \right|^2 + \left\| R^N f \right\|^2.$$

Although matching pursuit places very few restrictions on the dictionary set, the structure of the latter is strongly related to convergence speed and thus to coding efficiency. The decay of the residual energy $\|R^n f\|^2$ has indeed been shown to be upper-bounded by an exponential, whose parameters depend on the dictionary. However, true optimization of the dictionary can be very difficult. Any collection of arbitrarily sized and shaped functions can be used, as long as completeness is respected.

Summary of the Invention

It is an object of the invention to provide a system for very low bit rate compression of digital face images, in order to store them on limited memory, cheap, storage devices (ID tags, smart cards, RFIDs).

According to the invention, this object is attained by a system as described in claim 1. This system transforms a face image in a series of geometric components, which offer a good visual quality at very low bit rate. Since these components also represent the most prominent features of the face images, they can directly be used for face recognition. Altogether, the system is designed and tuned for high compression of digital face images, allows security of the compressed data, the authentication of a person without reconstructing the encoded picture and/or queries in image databases in compressed form. The system also allows for simultaneous very low rate compression, and authentication operations. Further useful embodiments of the invention are described in the depending claims.

The system according to the present invention is used for very low bit rate compression of face images, in order to store them on small devices with limited memory, like ID tags, RFID, or smart cards. Simultaneously, the system allows for authentication of people, where the compressed image, taken from the storage device or captured in real-time, is compared to a library of IDs for face recognition. Thanks to the low rate compression engine, the library can even be queried remotely, via low bandwidth channels, like wireless or GSM links.

The compression is obtained by decomposition of the digital face image over a redundant library of functions, which can be customized for the current application. The image is converted into a series of geometric function indexes, along with their respective coefficients. These tuples can be used to reconstruct, with low complexity, the compressed face image for display. In the same time, they can directly be used for authentication operations, since they represent the most meaningful features from the face images. Very high compression ratio can be obtained with properly designed dictionaries, an order of magnitude higher than state-of-the-art compression schemes, with the same quality.

The invention includes a compression and authentication system, as well as the design of the library of functions, and the authentication method, based on a set of geometric features, used simultaneously for image representation, and classification.

Brief Description of the Drawings

The advantages of the present invention will become readily apparent to those ordinarily skilled in the art after reviewing the following detailed description and accompanying drawings, wherein:

FIG. 1 is a block diagram of an encoder having three stages according to the invention.

FIG. 2 is a detailed view of the first stage of the system, showing the preprocessing step using an 8x8 Gaussian filter.

FIG. 3 illustrates the structure of the bit-stream generated by the encoder.

FIG. 4 presents a general view of the system.

FIG. 5 illustrates the principle of the authentication engine.

FIG. 6 shows a comparison between an original image and other results.

FIG. 7 presents a comparison of this system against the JPEG standard for image compression.

FIG. 8 illustrates the preprocessing realized in the first stage of the algorithm, and

FIG. 9 shows a table for a change of variables.

Brief description of a preferred embodiment

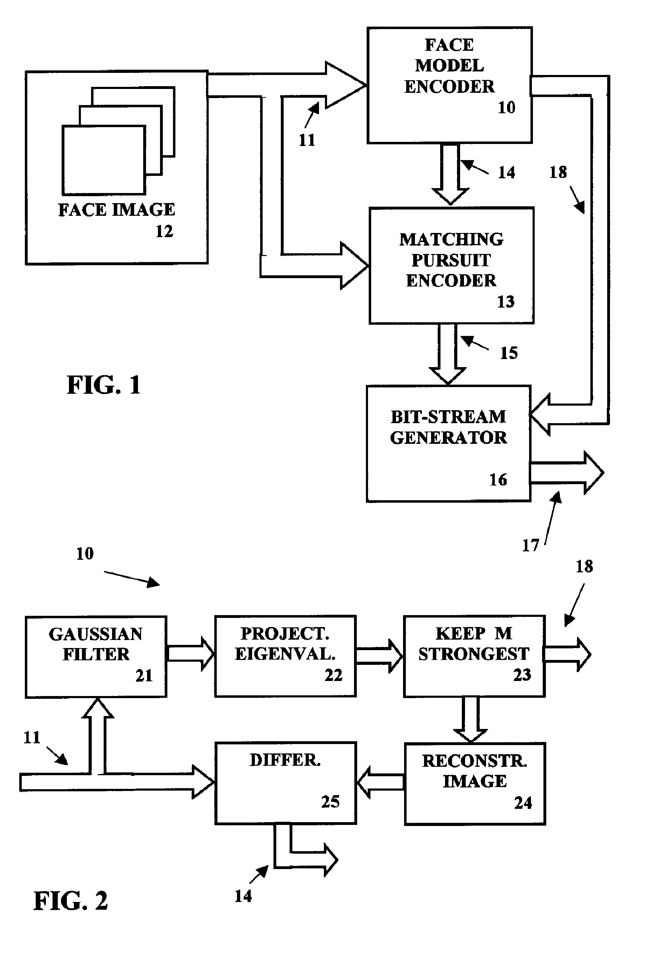

The system according to fig. 1 comprises a face model encoder 10 fed with face image signals 11 from a face image generator or block 12, a matching pursuit encoder 13 fed with residual face image signals 14 delivered from a first output of said face model encoder 10 and giving MP-parameter signals 15 to a first input of a bit-stream generator 16 which delivers the desired bit-stream 17, and wherein said face model encoder 10 has a second output giving model parameter signals 18 to a second input of said bit-stream generator 16. Therefore, the invention may be considered as a general system made of three independent stages:

In the first stage the face model encoder 10 (fig. 2) computes the closest approximation of any input face image with a pre-computed mean model of faces. The mean model 14 is computed from a database of face images. Various techniques, e.g. according to fig. 2, can be used to generate this model. At the second stage, the difference between this approximation 14 and the original image 11 is projected in said matching pursuit encoder 13 on a redundant dictionary of waveforms that capture the remaining high-frequency components. The design of the dictionary is a degree freedom in the general system. The algorithm used to compute the projection on the dictionary is a degree of freedom of the general system. Finally, in the third stage said bit-stream generator 16 is a encoder, taking as input the various parameters 18 and 15 of the first two stages and applying quantization and entropy coding to generate said compressed bit-stream 17. The actual parameters to be coded are: projections of the original image on the mean model, labels of elements of the dictionary used for representing the residual image and related projection coefficients. A bit-stream header describes the syntax of the bit-stream, in particular it signals which part of the bit-stream pertains to the first and second stages.

It must be emphasized that each of these stages taken separately existed prior to the invention. The novelty of this system resides in the serial combination of the first and second stages to provide accurate representation of face images. More precisely, the high frequency details of the residual image 14 computed at stage 10, which are normally discarded, convey a lot of important features to discriminate faces. In this system, the second stage 13 may be used to represent and encode these important features. Together with the low frequency face model parameters 18 computed at stage 10, these high-frequency components allow for superior quality. Each of these stages is described further and particularized in the preferred embodiment.

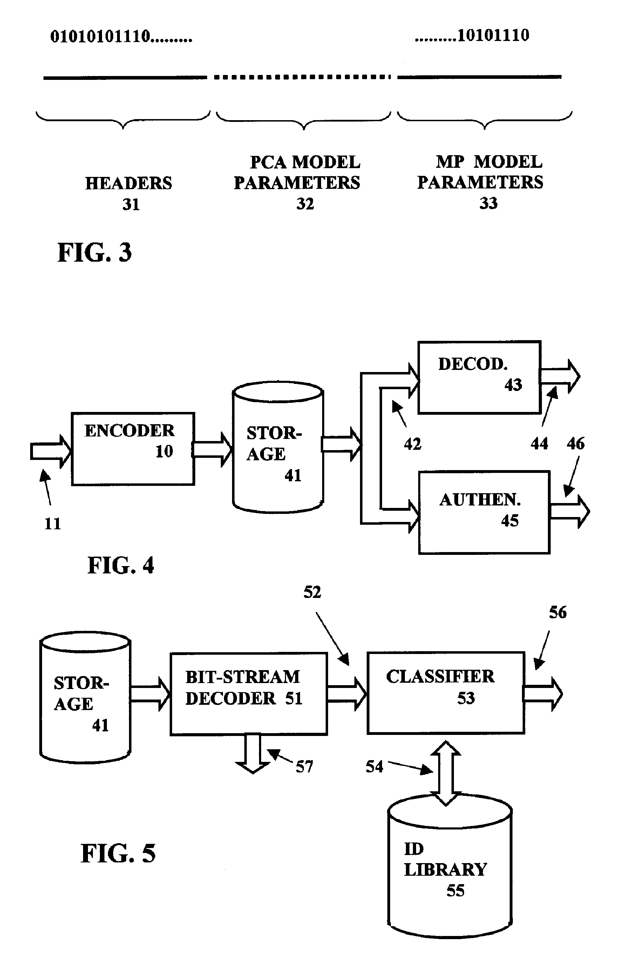

According to fig. 3 the structure of the bit-stream 17 generated by the encoder 16 comprises a header 31 containing information about the values of M and N, which is added to the bit-stream 18 and includes PCA model parameters 32 and MP model parameters 33.

The system, as shown in a general view in fig. 4, has a storage 41 giving a bit-stream 42 for a decoder 43 which delivers the face image signals 44 and/or for an authentication engine 45 which delivers an alarm signal 46. The bit-stream can be stored in a database and then be reused to decode the face or for authentication.

The authentication engine, depicted in principle in fig. 5, includes a bit-stream decoder 51 giving MP-parameter signals 52 to a classifier 53 connected by a bus 54 to a library 55. The alarm signals 56 are delivered from the classifier 53. The decoder 51 delivers also model parameters 57, but only the MP-parameters 52 from the second stage may be used. The face model of the first stage represents the low frequencies contained in the image and is not relevant enough for authentication.

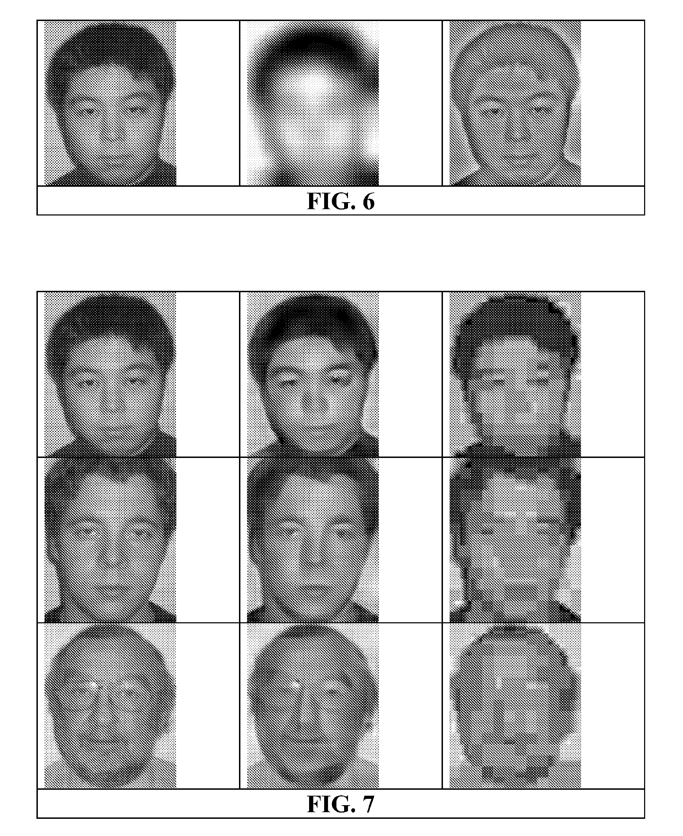

The residual image computed at stage one carries a lot of important face details. These details are not present in the low frequency face models of stage one but are encoded using the second stage of the system. Fig. 6 illustrates the original image (left), a low frequency model computed at stage one of the system (center) and high-frequency residual image sent to stage two of the system (right). Fig. 6 shows the importance of combining stages one and two of the system.

A comparison of this system against the JPEG standard for image compression, at 375 bytes, is presented in Fig. 7. showing original face images (left), images encoded with the current system at 375 bytes (center) and images encoded using JPEG at 375 bytes (right). The comparison clearly illustrates the superior image quality of the proposed system (center).

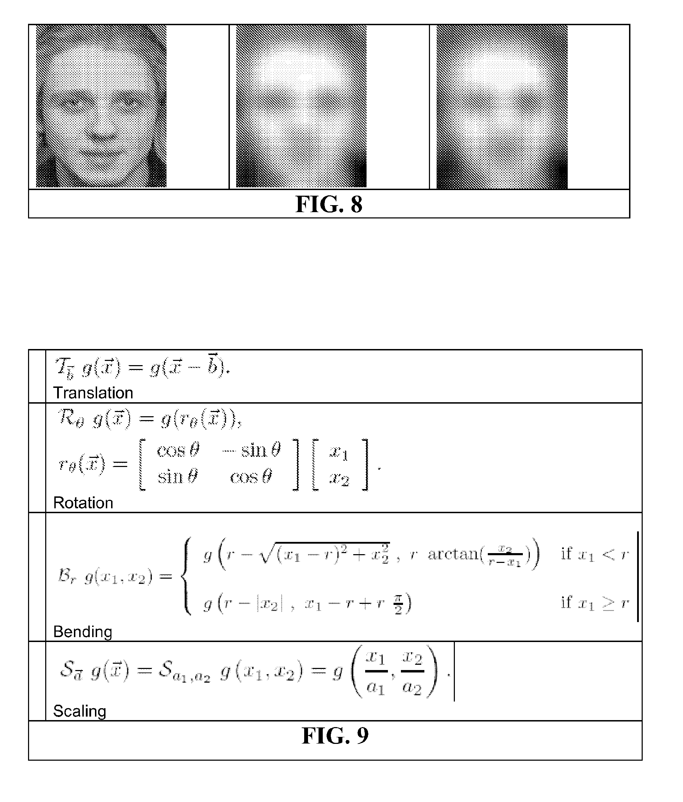

As illustrated in fig. 8, the preprocessing realized in the first stage of the algorithm highly enhances the quality of the low frequency face image model computed in that stage.

Detailed description of the preferred embodiment

The face model encoder 10 according to fig 2, consists of an arrangement of several blocks 21, 22, 23, 24 and 25, intended for the realization of said first stage 10 in which a mean face model of an input image 11 is created by projecting the image on a set of eigenfaces in said block 22 for the projection on all eigenfaces. Eigenfaces are computed by applying principal component analysis (PCA) to a database of face images. The mean face is computed as follows: First the input image is filtered by a simple 8x8 Gaussian filter 21 to generate a smoother image. The same operation has been applied to all face images in the database for a proper normalization. The eigenfaces are computed as eigenvectors of the covariance matrix of the database using standard numerical algebra methods. Second, the projection of the input face on all eigenfaces is computed in said block 22:

$$p_j = \langle e_j \mid f \rangle,$$

where $e_j$ it the $j^{th}$ eigenface of the set of eigenfaces.

Third the strongest M projections are kept in block 23, while other components are discarded. The output of block 23 delivers said model parameter signals 18. Indeed, a restricted number of principal components suffice to synthesize those features common to any human face in block 24 (see also Figure 8 below). Let $\left\{ e_i \right\}_{i=1}^{M}$ be the set of eigenfaces corresponding to the strongest M projections. Fourth, a mean image $\tilde{f}_L$ is constructed by summing in block 25 the corresponding eigenfaces weighted by projection coefficients:

$$\tilde{f}_L = \sum_{i=1}^{M} p_i e_i \,,$$

This mean image represents those features common to all faces and is uniquely determined by the indexes of the used eigenfaces and the associated projection coefficients. Thus the output of block 25 delivers said residual face parameters 14 of said first stage 10.

In the second stage 13, the mean image $\tilde{f}_L$, or signal 14, created in the first stage 10 is subtracted from the original image $f$, or signal 11, resulting in a residual image $\tilde{f}_H = f - \tilde{f}_L$, or signal 15, containing variations of the actual face with respect to the mean. This residual image is then decomposed over a large dictionary of waveforms. First, the dictionary is created by applying geometrical transformations to a generating function. The chosen mother function has been chosen from prior art on image coding [3]:

$$g(x,y) = (4x^2 - 2)e^{-x^2+y^2}.$$

The applied transformations and according parameters are: Translation $\vec{b} = (b_1,b_2)$, Anisotropic scaling $\vec{a} = (a_1,a_2)$, Rotation θ, Bending $r$.

Any element of this dictionary is thus uniquely labeled by a 6 dimensional vector. An atom is thus defined as follows:

$$\mathrm{atom}_{(\vec{b},\theta,r,\vec{a})}(\vec{x}) = T_{\vec{b}} \, \mathcal{R}_\theta \, \mathcal{B}_r \, \mathcal{S}_{\vec{a}} \, g(\vec{x}).$$

where the vector $[\vec{b}, \vec{a}, \theta, r]$ uniquely determines the transformation to apply to the generation function. These transformations and their application to generate the dictionary have been chosen from prior art [4] and are implemented using changes of variables listed in the table according to fig. 9.

Second, the residual image is decomposed over the dictionary by means of the matching pursuit algorithm described above. The algorithm uses N elements of the dictionary to approximate the image and returns the N six dimensional vectors and projection coefficients used for the decomposition. These values are refereed to as MP parameters in fig. 1.

Third stage: The set of parameters calculated in the first two stages is passed to a encoder that will generate a bit-stream 17. These parameters are: M projection coefficients and M labels of eigenfaces computed in the first stage. N six dimensional vectors and N projection coefficients computed in the second stage.

First, a header containing information about the values of M and N is added to the bit-stream.

The mean image parameters are coded as follows. The M labels and associated projections are re-ordered such that the absolute values of the projections are decreasing. The first projection is quantified and encoded to the stream. The following ones pass through a differential encoder and are added to the bit-stream. The labels of the eigenfaces are added to the bit-stream independently using.

The residual image parameters are coded according to the algorithm introduced in [2]. The encoder generates a bit-stream by first encoding the projections. Positions are sorted in descending order of absolute value. Each projection is encoded using the adaptive quantifier described in [2]. All the parameters (position, quantized coefficients and remaining parameters) are entropy coded using an arithmetic encoder to form the final bit-stream.

A genuine decoder would proceed as follows.

First read the bit-stream stored on the low-memory device. Second entropy decode the stream and read header which contains the information about M and N. The decoder reads the projections and the information about the eigenfaces that have been used. At this point, it is possible to reconstruct the low-pass part of the face image. The decoder then reads the data about the residual part. Knowing the identity of the basis elements and the corresponding projections, it is straight forward to reconstruct the residual image. Finally, the image of the face is reconstructed by summing up the previously low-pass part and the high-pass part.

References Cited

1. S. G. Mallat and Z. Zhang, "matching pursuits With Time-Frequency Dictionaries", Transactions on Signal Processing, Vol. 41, No. 12, December 1993

2. R. Figueras i Ventura, "Sparse Image Approximation with application to Flexible Image Coding", EPFL PhD thesis N0 3284, 2005

3. P. Vandergheynst and P. Frossard, "Efficient image representation by anisotropic refinement in matching pursuit", Proceedings of the IEEE ICASSP, Vol. 3, pp. 1757-1760, May 2001

4. L. Peotta, L. Granai and P. Vandergheynst, "Very low bit rate image coding using redundant dictionaries", Proceedings of the SPIE, Wavelets: Applications in Signal and Image Processing X, Vol. 5207, pp. 228-239, November 2003

**Claims**

1. System for very low rate face image compression, wherein the compression is obtained by decomposition of a digital face image over a redundant library of functions, wherein the image is converted into a series of geometric function indexes, along with their respective coefficient tuples which may be used to reconstruct the compressed face image for display.

2. System in accordance with claim 1, including a face model encoder (10) fed with face image signals (11), a matching pursuit encoder (13) fed with residual face image signals (14) delivered from a first output of said face model encoder (10) and giving MP-parameter signals (15) to a first input of a bit-stream generator (16) which delivers the desired bit-stream (17), and wherein said face model encoder (10) has a second output giving model parameter signals (18) to a second input of said bit-stream generator (16)

3. System in accordance with claim 1 or 2, wherein in the face model encoder (21, 22, 23, 24 25) a mean face model of an input image (11) filtered by a Gaussian filter (21) is created by projecting the image on a set of eigenfaces (22) for the projection on all eigenfaces which are computed as eigenvectors of the covariance matrix of the database using standard numerical algebra methods.

4. System in accordance with claim 3, wherein the projection of the input face on all eigenfaces is computed (22) and the strongest M projections are kept in a KMS block (23) which delivers said model parameter signals (18).

5. System in accordance with claim 4, wherein a number of principal components are used to synthesize those features common to any human face in a RI block (24).

6. System in accordance with claim 5, wherein a mean image is constructed by summing in a difference block (25) the corresponding eigenfaces weighted by projection coefficients, and wherein said difference (25) delivers said residual face parameters (14) of said first stage (10).

7. System in accordance with one of the claims 4 to 6, wherein the structure of the bit-stream (17) generated by the bit-stream generator (16) comprises a header (31) containing information about the M and N values, which is added to the bit-stream (18) and includes PCA model parameters (32) and MP model parameters (33).

8. System in accordance with one of the precedent claims, comprising a storage (41) giving a bit-stream (42) for a decoder (43), which delivers face image signals (44), and/or for an authentication engine (45), which delivers an alarm signal (46).

9. System in accordance with one of the precedent claims, comprising an authentication engine including a bit-stream decoder (51) giving MP-parameter signals (52) to a classifier (53) connected to a library (55), wherein the alarm signals (56) are delivered from a classifier (53).

10. System in accordance with one of the precedent claims, comprising a dictionary created by applying geometrical transformations to a generating function, wherein the applied transformations and according parameters are: Translation, Anisotropic scaling, Rotation and Bending.

**FIG. 1**

**FIG. 2**

01010101110.........                    ........10101110

HEADERS
31

PCA MODEL
PARAMETERS
32

MP MODEL
PARAMETERS
33

**FIG. 3**

ENCODER
10

STOR-
AGE
41

DECOD.
43

42

44    46

AUTHEN.
45

11

**FIG. 4**

52

56

STOR-
AGE
41

BIT-STREAM
DECODER 51

CLASSIFIER
53

57

54

ID
LIBRARY
55

**FIG. 5**

FIG. 6

FIG. 7

**FIG. 8**

$$\mathcal{T}_{\vec{b}} \; g(\vec{x}) = g(\vec{x} - \vec{b}).$$

Translation

$$\mathcal{R}_{\theta} \; g(\vec{x}) = g(r_{\theta}(\vec{x})),$$

$$r_{\theta}(\vec{x}) = \begin{bmatrix} \cos\theta & -\sin\theta \\ \sin\theta & \cos\theta \end{bmatrix} \begin{bmatrix} x_1 \\ x_2 \end{bmatrix}.$$

Rotation

$$\mathcal{B}_r \; g(x_1, x_2) = \begin{cases} g\left( r - \sqrt{(x_1 - r)^2 + x_2^2} \; , \; r \; \arctan(\frac{x_2}{r - x_1}) \right) & \text{if } x_1 < r \\ g\left( r - |x_2| \; , \; x_1 - r + r \; \frac{\pi}{2} \right) & \text{if } x_1 \geq r \end{cases}$$

Bending

$$\mathcal{S}_{\vec{a}} \; g(\vec{x}) = \mathcal{S}_{a_1, a_2} \; g(x_1, x_2) = g\left( \frac{x_1}{a_1}, \frac{x_2}{a_2} \right).$$

Scaling

**FIG. 9**

**European Patent Office**

**EUROPEAN SEARCH REPORT**

Application Number

EP 06 12 0577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VENTURA R M FIGUERAS ET AL: "Low-rate and flexible image coding with redundant representations" IEEE TRANSACTIONS ON IMAGE PROCESSING IEEE USA, vol. 15, no. 3, March 2006 (2006-03), pages 726-739, XP002437956 ISSN: 1057-7149 * the whole document * | 1 | INV. H04N7/26 G06K9/00 |
| Y | | 2-10 | |
| Y | TORRES L ET AL: "High compression of faces in video sequences for multimedia applications" MULTIMEDIA AND EXPO, 2002. ICME '02. PROCEEDINGS. 2002 IEEE INTERNATIONAL CONFERENCE ON LAUSANNE, SWITZERLAND 26-29 AUG. 2002, PISCATAWAY, NJ, USA,IEEE, US, vol. 1, 26 August 2002 (2002-08-26), pages 481-484, XP010604410 ISBN: 0-7803-7304-9 * pages 481-483, paragraph 2 - paragraph 4 * | 2-10 | |
| A | | 1 | TECHNICAL FIELDS SEARCHED (IPC) H04N |
| A | DE 195 09 373 C1 (SIEMENS AG [DE]) 8 August 1996 (1996-08-08) * page 9, lines 29-53 * * figure 2 * | 1-10 | |
| A | TURK M ET AL: "EIGENFACES FOR RECOGNITION" JOURNAL OF COGNITIVE NEUROSCIENCE, CAMBRIDGE, MA, US, vol. 3, no. 1, January 1991 (1991-01), pages 71-86, XP000490270 * the whole document * | 1-10 | |

-/--

The present search report has been drawn up for all claims

| Place of search | Date of completion of the search | Examiner |
|---|---|---|
| Munich | 15 June 2007 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 12 0577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | PEOTTA L ET AL: "Very low bit rate image coding using redundant dictionaries" PROCEEDINGS OF THE SPIE - THE INTERNATIONAL SOCIETY FOR OPTICAL ENGINEERING SPIE-INT. SOC. OPT. ENG USA, vol. 5207, no. 1, 14 November 2003 (2003-11-14), pages 228-239, XP002437957 ISSN: 0277-786X * pages 229-234, paragraph 2 - paragraph 6 * | 1-10 | |
| D,A | VANDERGHEYNST P ET AL: "Efficient image representation by anisotropic refinement in matching pursuit" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 7 May 2001 (2001-05-07), pages 1757-1760, XP010802930 ISBN: 0-7803-7041-4 * page 1757 - page 1758, paragraph 2 * * page 1758 - page 1759, paragraph 3 * | 1-10 | TECHNICAL FIELDS SEARCHED (IPC) |

The present search report has been drawn up for all claims

| Place of search | Date of completion of the search | Examiner |
|---|---|---|
| Munich | 15 June 2007 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 0577

15-06-2007

| Patent document cited in search report | Publication date | Patent family member(s) | Publication date |
|---|---|---|---|
| DE 19509373 C1 | 08-08-1996 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. G. MALLAT ; Z. ZHANG.** matching pursuits With Time-Frequency Dictionaries. *Transactions on Signal Processing,* December 1993, vol. 41 (12
- **R. FIGUERAS ; I VENTURA.** Sparse Image Approximation with application to Flexible Image Coding. *EPFL PhD thesis N0 3284,* 2005

- **P. VANDERGHEYNST ; P. FROSSARD.** Efficient image representation by anisotropic refinement in matching pursuit. *Proceedings of the IEEE ICASSP,* May 2001, vol. 3, 1757-1760
- **L. PEOTTA ; L. GRANAI ; P. VANDERGHEYNST.** Very low bit rate image coding using redundant dictionaries. *Proceedings of the SPIE, Wavelets: Applications in Signal and Image Processing X,* November 2003, vol. 5207, 228-239